# EUROPEAN PATENT SPECIFICATION

(11) **EP 4 662 173 B1**
(45) Date of publication and mention of the grant of the patent: **29.07.2026**
(21) Application number: 24702784.0
(22) Date of filing: 31.01.2024
(51) Int. Cl.: C01B 33/18, C01B 13/34, C01G 1/02, C08K 3/22, C01G 23/07

(54) **PROCESS FOR MANUFACTURING OXIDES**
VERFAHREN ZUR HERSTELLUNG VON OXIDEN
PROCÉDÉ DE FABRICATION D'OXYDES

(30) Priority: 10.02.2023 EP 23156041
(43) Date of publication of application: 17.12.2025
(73) Proprietor: Evonik Operations GmbH, 45128 Essen (DE)
(72) Inventor: SCHMIDT, Franz, 64521 Groß-Gerau (DE); LYGIN, Alexander, 64347 Griesheim (DE)
(74) Representative: Evonik Patent Association
(86) International application number: PCT/EP2024/052294
(87) International publication number: WO 2024/165387

(56) References cited:
- EP-A1- 1 383 010
- US-B1- 6 248 495
- CHI JUN ET AL: "Water electrolysis based on renewable energy for hydrogen production", vol. 39, no. 3, 5 March 2018 (2018-03-05), Amsterdam NL, pages 390 - 394, XP093064084, ISSN: 1872-2067, Retrieved from the Internet <URL:https://www.sciencedirect.com/science/article/pii/S1872206717629498/pdfft?md5=39cba0c4e3cfdd8ca42a99f381bd626d&pid=1-s2.0-S1872206717629498-main.pdf> DOI: 10.1016/S1872-2067(17)62949-8
- PIROM WASIN ET AL: "Electrical Energy-Based Hydrogen Production via PEM Water Electrolysis for Sustainable Energy", 2022 INTERNATIONAL ELECTRICAL ENGINEERING CONGRESS (IEECON), IEEE, 9 March 2022 (2022-03-09), pages 1 - 4, XP034107039, DOI: 10.1109/IEECON53204.2022.9741667

## Description

Finely dispersed metal oxide and metalloid oxide powders, such as silica, alumina, titania and others are required for a broad range of technical applications today. Well-established routes for their production are based on pyrogenic processes, i.e. processes involving flame hydrolysis and/or flame pyrolysis of precursors (cf. Ullmann's Encyclopedia of Industrial Chemistry (1982) Volume 21, page 464). The flame used in these processes is typically formed by combining and igniting streams of a gas mixture comprising hydrogen and a gas mixture comprising oxygen in a burner. Volatile metal or metalloid precursors are supplied into the hydrogen or oxygen stream or into the flame directly and converted therein to finely dispersed metal oxide and/or metalloid oxide powders.

US 6,248,495 discloses a process for manufacturing metal oxide by introducing a metal precursor into a flame, wherein the flame used is formed by burning a gas mixture comprising oxygen and hydrogen.

The oxygen used for pyrogenic processes may originate from air or can be obtained by energy-consuming fractional distillation of air. In the first case (air use), large amounts of nitrogen are introduced into the system, thus significantly increasing the overall gas volume, and thus reducing productivity of the plant.

Moreover, due to dilution with nitrogen when using air as an oxygen-source, the temperature of the flame (usually calculated as adiabatic flame temperature) is limited to about 1600 - 2000 °C. Therefore, in view of the fact that some products of pyrogenic processes require higher adiabatic flame temperatures, use of oxygen-enriched mixtures is required in these cases instead (cf. e.g. WO2004054929A1).

However, temperature gradients in the flame may be more significant in processes using oxygen-enriched mixtures than when using unmodified air, and such temperature gradients may result in less homogeneous products.

In view of the above, a problem to be solved by the present invention resides in providing a process for producing pyrogenic metal oxides of well-established, homogeneous quality, with reduced overall CO₂ emissions and minimal external fossil-based energy consumption, while providing higher productivity (i.e. higher metal or metalloid oxide content per unit of gas volume in the product mixture).

The present invention relates to a pyrogenic process for manufacturing metal oxides or metalloid oxides that solves these problems, wherein a metal precursor and/or a metalloid precursor is introduced into a flame formed by burning a gas mixture comprising oxygen, hydrogen and nitrogen, wherein at least a part of the hydrogen and at least a part of the oxygen have been obtained from electrolysis of water or an aqueous solution, using electrical energy, at least a part of which has been obtained from a renewable energy source; and wherein water (H₂O) is introduced into the flame; and wherein the total molar ratio TRON of oxygen gas to nitrogen gas TRON = n(O₂) : n(N₂) of all streams introduced into the flame prior to ignition combined is TRON ≥ 0.25 and ≤ 1.

Hydrogen and/or oxygen prepared via water electrolysis typically contain significant amount of water. Drying these gases after the electrolysis is an additional process step, increasing the cost and the CO₂ footprint of the total process. It has now been found, that water present in the hydrogen and/or oxygen obtained by the water electrolysis may be at least partially directly used in the production of fumed metal oxides according to the invention thus making it unnecessary to introduce additional water. Particularly preferably, all the water present in the oxygen and/or hydrogen obtained in the water electrolysis is used in the pyrogenic process. Surprisingly, this inventive process not only provides finely dispersed metal oxide and metalloid oxide powders in high quality, but also helps significantly reducing overall CO₂-emissions for hydrogen generation and oxygen generation, as well as increasing productivity of the plant.

Moreover, the presence of water in the feed gas, e.g. in the oxygen stream, is believed to improve the thermal conductivity of the feed gas, thus improving thermal equilibration in feed gas and the product gas mixture, and thereby reducing the overall temperature as well as temperature gradients in the flame and thus enabling access to lower adiabatic flame temperatures as well as more homogeneous products.

### The present invention

The problems discussed above are solved by the present invention providing a process for manufacturing metal oxides and/or metalloid oxides, comprising step (X):
(X) introducing a metal precursor and/or a metalloid precursor into a flame,
wherein
(a) the flame used in step (X) is formed by burning a gas mixture comprising oxygen, hydrogen and nitrogen,
   - wherein at least a part of the hydrogen and at least a part of the oxygen have been obtained from electrolysis of water or an aqueous solution, using electrical energy, at least a part of which has been obtained from a renewable energy source;
   and wherein
(b) water (H₂O) is introduced into the flame;
   and wherein
(c) the total molar ratio TRON of oxygen gas to nitrogen gas TRON = n(O₂) : n(N₂) of all streams introduced into the flame prior to ignition combined is TRON ≥ 0.25 and ≤ 1.

Forming a flame by burning a gas mixture comprising oxygen, hydrogen and nitrogen and introducing a metal precursor and/or a metalloid precursor therein, according to the present invention can be achieved by any means known to people of skill in the art. Comprehensive descriptions of such pyrogenic processes particularly suitable for the purpose of the present invention have been described in the art, cf. e.g. Ullmann's Encyclopedia of Industrial Chemistry (1982) Volume 21, page 464. In the context of the present invention it is important to point out, that, in addition to gas streams introduced into the flame prior to ignition, a number of pyrogenic processes apply a second type of gas stream - gas streams introduced into the flame past ignition. Streams that are introduced into the flame prior to ignition enter the flame at its most upstream region, thus participating in and/or interacting with the combustion reaction in a very comprehensive manner over the entire length of the flame. Streams that are introduced into the flame past ignition on the other hand, do not pass through the most upstream region of the flame and thus do not participate in and/or interact with the combustion reaction as comprehensively as the streams added prior to ignition. Streams introduced past ignition are typically added for stabilizing the flame and preventing deposits in the reaction apparatus.

In preferred embodiments of the present invention the renewable energy source is selected from the group consisting of solar energy, wind energy, geothermal energy, hydropower from flowing water, tidal energy, energy obtained from burning of biomass, waste or biofuel, and combinations of these energy sources.

According to the present invention at least a part of the hydrogen and at least a part of the oxygen used for forming the flame are obtained from electrolysis of water or an aqueous solution, using electrical energy, at least a part of which has been obtained from a renewable energy source. A wide spectrum of processes for the production of hydrogen and/or oxygen from electrolysis of water or aqueous solutions are available in the art, all of which can be used in the context of the present invention.

In a preferred embodiment of the present invention the oxygen used for forming the flame, which is obtained from electrolysis of water or an aqueous solution, comprises at least 0.1 wt.% water.

In a particularly preferred embodiment of the present invention the oxygen used for forming the flame, which is obtained from electrolysis of water or an aqueous solution comprises at least 0.5 wt.% water, preferably at least 1 wt.%.

In preferred embodiments of the present invention the total molar ratio TRON of oxygen gas to nitrogen gas TRON = n(O₂) : n(N₂) of all streams introduced into the flame prior to ignition combined is at least 0.26, more preferably at least 0.270, most preferably at least 0.275 and lower or equal to 1, preferably lower or equal to 0.8 and more preferably lower or equal to 0.6. The inventive range for TRON is crucial for the present invention, since If TRON values are too high (i.e. O₂-rich mixtures, not enough N₂), the safety risk in process control is increased (pure O₂ compared to air) and process costs are significantly higher (because more pure O₂ is required).

In preferred embodiments of the present invention the metal oxides or metalloid oxides are selected from the oxides of aluminum (Al), titanium (Ti), zirconium (Zr), yttrium (Y), lithium (Li), magnesium (Mg), lanthanum (La), cerium (Ce), iron (Fe), zinc (Zn), and silicon (Si).

In preferred embodiments of the present invention the metal oxides or metalloid oxides are selected from the oxides of aluminum (Al), titanium (Ti), and silicon (Si).

According to the present invention the metal precursor or metalloid precursor is a compound containing one or more metals or metalloids, which compound undergoes chemical transformation, when exposed to a flame formed by burning a gas mixture comprising oxygen and hydrogen, into a mixture of one or more solid (at 25 °C and atmospheric pressure) oxides of a metal or metalloid and compounds that are gaseous or volatile at 25 °C and atmospheric pressure.

In preferred embodiments of the present invention the metal precursor or metalloid precursor is selected from aluminum chloride, aluminum oxychloride, titanium tetrachloride, titanium trichloride, titanium oxychloride, tetraalkoxytitanate, tetraalkoxysilicate, cyclic or acyclic siloxane, silicon tetrachloride, trichlorosilane, methyltrichlorosilane, dichlorosilane, monochlorosilane or mixtures thereof.

In a preferred embodiment of the present invention the total molar ratio TRWM of water to metal precursor and/or metalloid precursor introduced into the flame TRWM = n(H₂O) : n (metal precursor and/or metalloid precursor combined) is TRWM ≥ 0.005.

In a particularly preferred embodiment of the present invention the total molar ratio TRWM of water to metal precursor and/or metalloid precursor introduced into the flame TRWM = n(H₂O) : n (metal precursor and/or metalloid precursor) is TRWM ≥ 0.01.

In a particularly preferred embodiment of the present invention the total molar ratio TRWM of water to metal precursor and/or metalloid precursor introduced into the flame TRWM = n(H₂O) : n (metal precursor and/or metalloid precursor combined) is TRWM ≥ 0.005, and the total molar ratio TRON of oxygen gas to nitrogen gas TRON = n(O₂) : n(N₂) of all streams introduced into the flame prior to ignition combined is TRON ≥ 0.26 and ≤ 1.

In the context of the present invention standard conditions are defined as temperature of 273,15 K = 0 °C and pressure of 100 000 Pa = 1,000 bar.

Adiabatic Flame temperatures are calculated with commercially available software tools using initial temperatures, reaction enthalpies and heat capacities of all components present in the flame zone.

Throughout this specification the terms "gamma " or "gamma ratio", as well as "lambda" or "lambda ratio" are defined as follows:
"gamma" or "gamma ratio" = H₂ supplied/stoichiometrically required H₂
"lambda" or "lambda ratio" = O₂ supplied/stoichiometrically required O₂

### Examples

### Comparative example 1:

The mixture of 2.7 kg/h SiCl₄ in vapor form, 1.0 m³/h hydrogen, 0.2 m³/h nitrogen and 2.4 m³/h air was premixed in a burner as known from prior art. These gases are referred as core gases, mainly contributing to the product properties and are listed in table 1. The burner flame was stabilized by 0.5 m³/h hydrogen which is uses as a mantel flame. Additional to that 6m³/h secondary air shields the flame from the combustion chamber. The reaction mixture was ignited and burned from the opening of the burner into the combustion chamber and further into the cooled flame tube. The particle gas mixture was further cooled down and the fumed silica powder formed was separated from the gases and deacidified. The adiabatic flame temperature, calculated from the core gases and the particle properties are shown in table 2.

### Comparative example 2:

The mixture of 2.7 kg/h SiCl₄ in vapor form, 1.0 m³/h hydrogen, 0.2 m³/h nitrogen and 1.4 m³/h air, 0.2 m³/h oxygen (obtained not from water electrolysis) was premixed in a burner as known from prior art. These gases are referred as core gases, mainly contributing to the product properties and are listed in table 1. The burner flame was stabilized by 0.5 m³/h hydrogen which is uses as a mantel flame. Additional to that 6m³/h secondary air shields the flame from the combustion chamber. The reaction mixture was ignited and burned from the opening of the burner into the combustion chamber and further into the cooled flame tube. The particle gas mixture was further cooled down and the fumed silica powder formed was separated from the gases and deacidified. The adiabatic flame temperature, calculated from the core gases and the particle properties are shown in table 2.

### Example 2:

The mixture of 2.7 kg/h SiCl₄ in vapor form, 1.0 m³/h hydrogen obtained from water electrolysis, 0.2 m³/h nitrogen, 1.4 m³/h air and 0.2 m³/h oxygen obtained from water electrolysis containing water vapor corresponding to 0.003 kg/h vaporized water was premixed in a burner as known from prior art. These gases are referred as core gases, mainly contributing to the product properties and are listed in table 1. The burner flame was stabilized by 0.5 m³/h hydrogen which is uses as a mantel flame. Additional to that 6m³/h secondary air shields the flame from the combustion chamber. The reaction mixture was ignited and burned from the opening of the burner into the combustion chamber and further into the cooled flame tube. The particle gas mixture was further cooled down and the fumed silica powder formed was separated from the gases and deacidified. The adiabatic flame temperature, calculated from the core gases and the particle properties are shown in table 2.

### Example 3:

The mixture of 2.7 kg/h SiCl₄ in vapor form, 1.0 m³/h hydrogen obtained from water electrolysis, 0.2 m³/h nitrogen, 1.0 m³/h air and 0.3 m³/h oxygen obtained from water electrolysis containing water vapor corresponding to 0.003 kg/h vaporized water was premixed in a burner as known from prior art. These gases are referred as core gases, mainly contributing to the product properties and are listed in table 1. The burner flame was stabilized by 0.5 m³/h hydrogen which is uses as a mantel flame. Additional to that 6m³/h secondary air shields the flame from the combustion chamber. The reaction mixture was ignited and burned from the opening of the burner into the combustion chamber and further into the cooled flame tube. The particle gas mixture was further cooled down and the fumed silica powder formed was separated from the gases and deacidified. The adiabatic flame temperature, calculated from the core gases and the particle properties are shown in table 2.

### Example 4:

The mixture of 2.7 kg/h SiCl₄ in vapor form, 1.0 m³/h hydrogen obtained from water electrolysis, 0.2 m³/h nitrogen, 1.0 m³/h air and 0.3 m³/h oxygen obtained from water electrolysis containing water vapor and additional 0.2 kg/h vaporized water was premixed in a burner as known from prior art. These gases are referred as core gases, mainly contributing to the product properties and are listed in table 1. The burner flame was stabilized by 0.5 m³/h hydrogen which is uses as a mantel flame. Additional to that 6m³/h secondary air shields the flame from the combustion chamber. The reaction mixture was ignited and burned from the opening of the burner into the combustion chamber and further into the cooled flame tube. The particle gas mixture was further cooled down and the fumed silica powder formed was separated from the gases and deacidified. The adiabatic flame temperature, calculated from the core gases and the particle properties are shown in table 2.

**Table 1: Process parameters**

| Example | SiCl₄ [kg/h] | Primary air [m³/h] | O₂ [m³/h] | N2 [m³/h] | TRON O₂/N₂ [mol/mol] | Core H2 [m³/h] | H₂O [kg/h] | TRWM H₂0/Si [mol/mol] | gamma (core) | lambda (core) |
|---|---|---|---|---|---|---|---|---|---|---|
| Comp. 1 | 2.7 | 2.4 | 0.0 | 0.2 | 0.240 | 1 | 0.0 | 0 | 1.4 | 1.0 |
| Comp. 2 | 2.7 | 1.4 | 0.2 | 0.2 | 0.378 | 1 | 0.0 | 0 | 1.4 | 1.0 |
| Ex 2 | 2.7 | 1.4 | 0.2 | 0.2 | 0.378 | 1 | 0.003 | 0.011 | 1.4 | 1.0 |
| Ex 3 | 2.7 | 1.0 | 0.3 | 0.2 | 0.515 | 1 | 0.003 | 0.011 | 1.4 | 1.0 |
| Ex 4 | 2.7 | 1.0 | 0.3 | 0.2 | 0.515 | 1 | 0.2 | 0.7 | 1.4 | 1.0 |

**Table 2: Plant productivity, flame temperature and product properties**

| Example | SiCL₄ concentration in feed [kg/m³] | Adiab. Flame temp. [°C] | SiO₂ BET [m²/g] | Tamped density [g/L] |
|---|---|---|---|---|
| Comp. 1 | 0.683 | 2026 | 376 | 24 |
| Comp. 2 | 0.854 | 2431 | 157 | 33 |
| Ex 2 | 0.855 | 2428 | 164 | 35 |
| Ex 3 | 0.944 | 2627 | 121 | 46 |
| Ex 4 | 0.870 | 2421 | 199 | 35 |

The examples show that both electrolytically produced H₂ and O₂ can be used in the same pyrogenic process, wherein reducing the overall CO₂ emissions of the overall process (including H₂ and O₂ production). Simultaneously, productivity of the plant can be increased by using less N₂ ballast gas (Ex 2,3) and water present in the feed (Ex 4). Furthermore, as evidenced by example 2 in comparison with comparative example 2, products with higher specific surface area can be obtained by using undried oxygen from electrolysis, additionally thus, obviating the need for water removal.

Without wishing to be bound by any theory, small amounts of water present in the feed (Ex 2, 3) are believed to improve the thermal conductivity of the process product gas mixture and make the temperature in the flame more homogeneous, while larger water amount (Ex 4) is shown to significantly reduce the flame temperature thus delivering a product with the desired BET and lower process gas volume (= higher productivity of the plant).

## Claims

1. Process for manufacturing metal oxides and/or metalloid oxides, comprising step (X):
(X) introducing a metal precursor and/or a metalloid precursor into a flame,
wherein
(a) the flame used in step (X) is formed by burning a gas mixture comprising oxygen, hydrogen and nitrogen,
- wherein at least a part of the hydrogen and at least a part of the oxygen have been obtained from electrolysis of water or an aqueous solution, using electrical energy, at least a part of which has been obtained from a renewable energy source;
and wherein
(b) water (H₂O) is introduced into the flame;
and wherein
(c) the total molar ratio TRON of oxygen gas to nitrogen gas TRON = n(O₂) : n(N₂) of all streams introduced into the flame prior to ignition combined is TRON ≥ 0.25 and ≤ 1.

2. Process according to claim 1, wherein the oxygen obtained from electrolysis of water or an aqueous solution comprises at least 0.1 wt.% water.

3. Process according to any one of claims 1 to 2, wherein the oxygen obtained from electrolysis of water or an aqueous solution comprises at least 0.5 wt.% water, preferably at least 1 wt.%.

4. Process according to any one of claims 1 to 3, wherein the total molar ratio TRWM of water to metal precursor and/or metalloid precursor introduced into the flame TRWM = n(H₂O) : n (metal precursor and/or metalloid precursor combined) is TRWM ≥ 0.005.

5. Process according to any one of claims 1 to 4, wherein the total molar ratio TRWM of water to metal precursor and/or metalloid precursor introduced into the flame TRWM = n(H₂O) : n (metal precursor and/or metalloid precursor) is TRWM ≥ 0.01.

6. Process according to any one of claims 1 to 5, wherein the renewable energy source is selected from the group consisting of solar energy, wind energy, geothermal energy, hydropower from flowing water, tidal energy, energy obtained from burning of biomass, waste or biofuel, and combinations of these energy sources.

7. Process according to any one of claims 1 to 6, wherein the metal oxides or metalloid oxides are selected from the oxides of aluminum (Al), titanium (Ti), zirconium (Zr), yttrium (Y), lithium (Li), magnesium (Mg), lanthanum (La), cerium (Ce), iron (Fe), zinc (Zn), and silicon (Si).

8. Process according to any one of claims 1 to 7, wherein the metal oxides or metalloid oxides are selected from the oxides of aluminum (Al), titanium (Ti), and silicon (Si).

9. Process according to any one of claims 1 to 8, wherein the metal precursor or metalloid precursor is selected from aluminum chloride, aluminum oxychloride, titanium tetrachloride, titanium trichloride, titanium oxychloride, tetraalkoxytitanate, tetraalkoxysilicate, cyclic or acyclic siloxane, silicon tetrachloride, trichlorosilane, methyltrichlorosilane, dichlorosilane, monochlorosilane or mixtures thereof.

10. Process according to any one of claims 1 to 9, wherein the total molar ratio TRON of oxygen gas to nitrogen gas TRON = n(O₂) : n(N₂) of all streams introduced into the flame prior to ignition combined is at least 0.26, more preferably at least 0.270, most preferably at least 0.275 and lower or equal to 1, preferably lower or equal to 0.8 and more preferably lower or equal to 0.6 .

11. Process according to any one of claims 1 to 10, wherein
- the total molar ratio TRWM of water to metal precursor and/or metalloid precursor introduced into the flame TRWM = n(H₂O) : n (metal precursor and/or metalloid precursor combined) is TRWM ≥ 0.005, and wherein
- the total molar ratio TRON of oxygen gas to nitrogen gas TRON = n(O₂) : n(N₂) of all streams introduced into the flame prior to ignition combined is TRON ≥ 0.25 and ≤ 1.

## Patentansprüche

1. Verfahren zur Herstellung von Metalloxiden und/oder Metalloidoxiden, umfassend Schritt (X):
(X) Einführen eines Metallvorläufers und/oder eines Metalloidvorläufers in eine Flamme,
wobei
(a) die bei Schritt (X) verwendete Flamme durch Verbrennen eines Gasgemischs, das Sauerstoff, Wasserstoff und Stickstoff umfasst, gebildet wird,
- wobei wenigstens ein Teil des Wasserstoffs und wenigstens ein Teil des Sauerstoffs durch Elektrolyse von Wasser oder einer wässrigen Lösung unter Verwendung elektrischer Energie erhalten worden ist, von der wenigstens ein Teil aus einer erneuerbaren Energiequelle erhalten worden ist;
und wobei
b) Wasser (H₂O) in die Flamme eingeführt wird;
und wobei
(c) das Gesamtmolverhältnis TRON von Sauerstoffgas zu Stickstoffgas TRON = n(O₂) : n(N₂) aller Ströme, die vor der Zündung in die Flamme eingeleitet werden, kombiniert TRON ≥ 0,25 und ≤ 1 beträgt.

2. Verfahren nach Anspruch 1, wobei der durch Elektrolyse von Wasser oder einer wässrigen Lösung erhaltene Sauerstoff wenigstens 0,1 Gew.-% Wasser umfasst.

3. Verfahren nach einem der Ansprüche 1 bis 2, wobei der durch Elektrolyse von Wasser oder einer wässrigen Lösung erhaltene Sauerstoff wenigstens 0,5 Gew.-% Wasser, vorzugsweise wenigstens 1 Gew.-%, umfasst.

4. Verfahren nach einem der Ansprüche 1 bis 3, wobei das Gesamtmolverhältnis TRWM von Wasser zu Metallvorläufer und/oder Metalloidvorläufer, die in die Flamme eingeführt werden, TRWM = n(H₂O) : n (Metallvorläufer und/oder Metalloidvorläufer kombiniert) TRWM ≥ 0,005 beträgt.

5. Verfahren nach einem der Ansprüche 1 bis 4, wobei das Gesamtmolverhältnis TRWM von Wasser zu Metallvorläufer und/oder Metalloidvorläufer, die in die Flamme eingeführt werden, TRWM = n(H₂O) : n (Metallvorläufer und/oder Metalloidvorläufer ) TRWM ≥ 0,01 beträgt.

6. Verfahren nach einem der Ansprüche 1 bis 5, wobei die erneuerbare Energiequelle ausgewählt ist aus der Gruppe bestehend aus Solarenergie, Windenergie, geothermischer Energie, Wasserkraft aus fließendem Wasser, Gezeitenenergie, durch Verbrennung von Biomasse, Abfall oder Biokraftstoff gewonnener Energie und Kombinationen dieser Energiequellen.

7. Verfahren nach einem der Ansprüche 1 bis 6, wobei die Metalloxide oder Metalloidoxide ausgewählt sind aus den Oxiden von Aluminium (Al), Titan (Ti), Zirkonium (Zr), Yttrium (Y), Lithium (Li), Magnesium (Mg), Lanthan (La), Cer (Ce), Eisen (Fe), Zink (Zn) und Silicium (Si).

8. Verfahren nach einem der Ansprüche 1 bis 7, wobei die Metalloxide oder Metalloidoxide ausgewählt sind aus den Oxiden von Aluminium (Al), Titan (Ti) und Silicium (Si).

9. Verfahren nach einem der Ansprüche 1 bis 8, wobei der Metallvorläufer oder Metalloidvorläufer ausgewählt ist aus Aluminiumchlorid, Aluminiumoxychlorid, Titantetrachlorid, Titantrichlorid, Titanoxychlorid, Tetraalkoxytitanat, Tetraalkoxysilicat, cyclischem oder acyclischem Siloxan, Siliciumtetrachlorid, Trichlorsilan, Methyltrichlorsilan, Dichlorsilan, Monochlorsilan und Gemischen davon.

10. Verfahren nach einem der Ansprüche 1 bis 9, wobei das Gesamtmolverhältnis TRON von Sauerstoffgas zu Stickstoffgas TRON = n(O₂) : n(N₂) aller Ströme, die kombiniert vor der Zündung in die Flamme eingeführt werden, wenigstens 0,26, bevorzugter wenigstens 0,270, höchst bevorzugt wenigstens 0,275, und weniger als oder gleich 1, vorzugsweise weniger als oder gleich 0,8 und bevorzugter weniger als oder gleich 0,6 beträgt.

11. Verfahren nach einem der Ansprüche 1 bis 10, wobei
- das Gesamtmolverhältnis TRWM von Wasser zu Metallvorläufer und/oder Metalloidvorläufer, das in die Flamme eingeführt wird, TRWM = n(H₂O) : n (Metallvorläufer und/oder Metalloidvorläufer kombiniert), TRWM ≥ 0,005 beträgt, und wobei
- das Gesamtmolverhältnis TRON von Sauerstoffgas zu Stickstoffgas TRON = n(O₂) : n(N₂) aller Ströme, die kombiniert vor der Zündung in die Flamme eingeführt werden, TRON ≥ 0,25 und ≤ 1 beträgt.

## Revendications

1. Procédé de fabrication d'oxydes métalliques et/ou d'oxydes métalloïdes comprenant l'étape (X) :
(X) introduction d'un précurseur métallique et/ou d'un précurseur métalloïde dans une flamme,
dans lequel
(a) la flamme utilisée dans l'étape (X) est formée en brûlant un mélange de gaz comprenant de l'oxygène, de l'hydrogène et de l'azote,
- dans lequel au moins une partie de l'hydrogène et au moins une partie de l'oxygène ont été obtenues d'une électrolyse de l'eau ou d'une solution aqueuse, à l'aide d'énergie électrique, dont au moins une partie a été obtenue à partir d'une source d'énergie renouvelable ;
et dans lequel
(b) de l'eau (H₂O) est introduite dans la flamme ;
et dans lequel
(c) le rapport molaire total TRON de gaz d'oxygène sur gaz d'azote TRON = n(O₂) : n(N₂) de tous les flux introduits dans la flamme avant allumage combinés est TRON ≥ 0,25 et ≤ 1.

2. Procédé selon la revendication 1, dans lequel l'oxygène obtenu de l'électrolyse de l'eau ou d'une solution aqueuse comprend au moins 0,1 % en poids d'eau.

3. Procédé selon l'une quelconque des revendications 1 à 2, dans lequel l'oxygène obtenu de l'électrolyse de l'eau ou d'une solution aqueuse comprend au moins 0,5 % en poids d'eau, de préférence au moins 1 % en poids.

4. Procédé selon l'une quelconque des revendications 1 à 3, dans lequel le rapport molaire total TRWM d'eau sur précurseur métallique et/ou précurseur métalloïde introduit dans la flamme TRWM = n(H₂O) : n (précurseur métallique et/ou précurseur métalloïde combinés) est TRWM ≥ 0,005.

5. Procédé selon l'une quelconque des revendications 1 à 4, dans lequel le rapport molaire total TRWM d'eau sur précurseur métallique et/ou précurseur métalloïde introduit dans la flamme TRWM = n(H₂O) : n (précurseur métallique et/ou précurseur métalloïde) est TRWM ≥ 0,01.

6. Procédé selon l'une quelconque des revendications 1 à 5, dans lequel la source d'énergie renouvelable est choisie dans le groupe constitué par l'énergie solaire, l'énergie éolienne, l'énergie géothermique, l'énergie hydroélectrique issue de l'eau courante, l'énergie marémotrice, l'énergie obtenue de la combustion de biomasse, de déchets ou de biocarburant, et des combinaisons de ces sources d'énergie.

7. Procédé selon l'une quelconque des revendications 1 à 6, dans lequel les oxydes métalliques ou oxydes métalloïdes sont choisis parmi les oxydes d'aluminium (Al), de titane (Ti), de zirconium (Zr), d'yttrium (Y), de lithium (Li), de magnésium (Mg), de lanthane (La), de cérium (Ce), de fer (Fe), de zinc (Zn), et de silicium (Si) .

8. Procédé selon l'une quelconque des revendications 1 à 7, dans lequel les oxydes métalliques ou oxydes métalloïdes sont choisis parmi les oxydes d'aluminium (Al), de titane (Ti) et de silicium (Si).

9. Procédé selon l'une quelconque des revendications 1 à 8, dans lequel le précurseur métallique ou précurseur métalloïde est choisi parmi le chlorure d'aluminium, l'oxychlorure d'aluminium, le tétrachlorure de titane, le trichlorure de titane, l'oxychlorure de titane, un tétraalcoxytitanate, un tétraalcoxysilicate, un siloxane cyclique ou acyclique, le tétrachlorure de silicium, le trichlorosilane, le méthyltrichlorosilane, le dichlorosilane, le monochlorosilane ou leurs mélanges.

10. Procédé selon l'une quelconque des revendications 1 à 9, dans lequel le rapport molaire total TRON de gaz d'oxygène sur gaz d'azote TRON = n(O₂) : n(N₂) de tous les flux introduits dans la flamme avant ignition combinés est d'au moins 0,26, plus préférablement d'au moins 0,270, le plus préférablement d'au moins 0,275 et inférieur ou égal à 1, de préférence inférieur ou égal à 0,8 et plus préférablement inférieur ou égal à 0,6.

11. Procédé selon l'une quelconque des revendications 1 à 10, dans lequel
- le rapport molaire total TRWM d'eau sur précurseur métallique et/ou précurseur métalloïde introduit dans la flamme TRWM = n(H₂O):n (précurseur métallique et/ou précurseur métalloïde combinés) est TRWM ≥ 0,005, et dans lequel
- le rapport molaire total TRON de gaz d'oxygène sur gaz d'azote TRON = n(O₂) : n(N₂) de tous les flux introduits dans la flamme avant ignition combinés est TRON ≥ 0,25 et ≤ 1.
